# EUROPEAN PATENT SPECIFICATION

(11) **EP 3 942 685 B1**
(45) Date of publication and mention of the grant of the patent: **07.10.2026**
(21) Application number: 19713438.0
(22) Date of filing: 22.03.2019
(51) Int. Cl.: H02M 7/483, H02M 3/158

(54) **FULL-BRIDGE BUCK-BOOST CONVERTER CELL FOR MMC**
BUCK-BOOST VOLLBRÜCKEN WANDLERZELLE FÜR EINEN MODULAREN MEHRSTUFIGEN WANDLER
CELLULE DE CONVERSION BUCK-BOOST EN PONT COMPLET POUR UN CONVERTISSEUR MODULAIRE MULTI-NIVEAUX

(43) Date of publication of application: 26.01.2022
(73) Proprietor: Hitachi Energy Ltd, 8050 Zürich (CH)
(72) Inventor: IBANEZ, Marta, 5415 Nussbaumen (CH); MOHANAVEERAMANI, Aravind, 72219 Västerås (SE); SVENSSON, Jan, 72346 Västerås (SE); NAMI, Alireza, Nämndemansgatan 25, 170 66 Stockholm (SE)
(74) Representative: AWA Sweden AB
(86) International application number: PCT/EP2019/057226
(87) International publication number: WO 2020/192863

(56) References cited:
- US-A1- 2017 229 874
- ERICKSON: "Fundamentals of Power Electronics SECOND EDITION", 1 January 2007 (2007-01-01), XP055462444, Retrieved from the Internet <URL:https://eleccompengineering.files.wordpress.com/2015/01/fundamentals-of-power-electronics_2nd_erickson_full.pdf> [retrieved on 20180323]
- TANG YU ET AL: "Improved Dual Boost Inverter With Half Cycle Modulation", IEEE TRANSACTIONS ON POWER ELECTRONICS INSTITUTE OF ELECTRICAL AND ELECTRONICS ENGINEERS, USA, vol. 32, no. 10, 1 October 2017 (2017-10-01), pages 7543 - 7552, XP011648952, ISSN: 0885-8993, [retrieved on 20170510], DOI: 10.1109/TPEL.2016.2592979
- SINGH BHIM ET AL: "Power quality improvement in PFC Bridgeless-Luo converter fed BLDC motor drive", 2013 IEEE INDUSTRY APPLICATIONS SOCIETY ANNUAL MEETING, IEEE, 6 October 2013 (2013-10-06), pages 1 - 8, XP032529213, ISSN: 0197-2618, [retrieved on 20131211], DOI: 10.1109/IAS.2013.6682498
- ELSEROUGI AHMED ET AL: "An H-Bridge Modular DC-DC Converter with Bidirectional Flyback-Based Energy Equalization Modules", 2018 5TH INTERNATIONAL CONFERENCE ON ELECTRIC POWER AND ENERGY CONVERSION SYSTEMS (EPECS), IEEE, 23 April 2018 (2018-04-23), pages 1 - 5, XP033391401, DOI: 10.1109/EPECS.2018.8443544

## Description

### TECHNICAL FIELD

The present disclosure relates to a full-bridge converter cell for a Modular Multilevel Converter (MMC).

### BACKGROUND

MMC:s, having a plurality of series connected (also called chain-linked) converter cells, have become a popular choice for Medium Voltage (MV) and High-Voltage (HV) grid connected converters due to their enhanced modularity, scalability and excellent harmonic performance with reduced losses. Developments toward footprint (size) reduction and compactness has been in focus lately.

To reduce the cell capacitance and/or possible integration of energy storage within cell, WO2016/150466A1 discloses a Half-Bridge (HB) configuration with a DC-DC stage connecting to a main energy storage, which can be a battery, super capacitor or a normal capacitor. A filtering inductor is also required to control the current/power flow between the main energy storage and a filter energy storage. Some of the switches are switched at near fundamental frequency to insert or bypass the cell, while the switches of the DC-DC stage are switched at higher frequencies (>1 kHz) to reduce the size of the filtering elements. Disadvantages with that cell include the requirement of two different types of switches i.e., ones that switches at near fundamental switching frequency and the DC-DC stage that switches at high switching frequency, and a complex control structure is required i.e., a sorting algorithm with a central control architecture to operate the switches with fundamental frequency and local cell-level controllers to operate the DC-DC stage switches. Also, US 2017/229874 A1 discloses an MMC topology that is relevant for the present invention.

### SUMMARY

The invention is set out in the appended set of claims.

A conventional MMC is composed of half-bridge (HB) or Full-Bridge (FB, i.e. bipolar) cells, depending on application. Since each HB or FB cell is a so called buck converter, the cell DC voltage must always be higher than the generated output voltage else the diodes will be forward biased and the cell will behave as a diode rectifier. Of course, overmodulation may be allowed up to e.g. 1.27 p.u. but with harmonic injection. Only linear modulation is considered here for the sake of simplicity. For High-Voltage Direct Current (HVDC), Static Synchronous Compensator (STATCOM) and other MMC applications, such as Static Frequency, Railway Power Supply converter, etc., the net DC energy flowing into the cell energy storage per fundamental frequency cycle may be zero. However, there may exist a ripple energy (e.g. 50 or 100 Hz depending on the topology or operation) that needs to be stored in the cell energy storage. The cell capacitance may then be rated so that linear modulation is ensured for all operating points considering the ripple energy from the converter arm. The expression of the cell energy storage (here a capacitor) calculation may be: ${C}_{cell} = \frac{2 {E}_{arm , pk - pk}}{N \left({U}_{max}^{2}-{U}_{min}^{2}\right)}$ (1) where,
- C_{cell} is the required cell capacitance,
- E_{arm,pk-pk} is the peak-to-peak arm ripple energy which is calculated from the converter arm current and voltage waveforms,
- N is the number of converter cells per converter arm, and
- Uₘₐₓ and Uₘᵢₙ are the cell voltage values at the maximum and minimum ripple points obtained from the system design considering all operating points of the MMC.

Typically, a cell voltage ripple of 10% peak-to-peak is considered for a conventional MMC cell. Hence, 90% of the cell energy storage energy is unused making the cell unnecessarily bulky.

It has now been realized that, by embodiments of the present invention, much more of the energy storage capacity, i.e. the cell DC voltage, can be used to handle the DC voltage ripple, whereby the size (both physically (footprint) and by capacity) of the energy storage of each cell can be substantially reduced. For instance, if 90% of the cell capacitor energy is used, then cell capacitor reduction up to 80% ( $\frac{{1.05}^{2} - {0.1}^{2}}{{1.05}^{2} - {0.95}^{2}} = 5.7$ times reduction) can be achieved.

To generate the required cell output-voltage waveform irrespective of the large voltage ripple on the cell energy storage, a so called Buck-Boost (BB) operation in the converter cell will be required, in accordance with the present invention. The proposed cell structure may in some embodiments be regarded as a current source behind a regular FB cell (e.g. providing an H-bridge topology for enabling bi-polarity) behaving as a voltage-source cell.

According to an aspect not within the scope of the appended claims, there is provided a full-bridge converter cell. The cell comprises a BB arrangement comprising a plurality of converter valves, each valve comprising a semiconductor switch and an antiparallel diode. The cell also comprises a bi-polar arrangement arranged as an interface between the BB arrangement and terminals of the cell. The bi-polar arrangement comprises a plurality of converter valves, each valve comprising a semiconductor switch and an antiparallel diode. The BB arrangement is configured to, by means of switching of its semiconductor switches, operate such that, when electrical power is flowing into the cell, power is moved from the terminals to a main energy storage of the BB arrangement, charging said main energy storage, via an inductor of the BB arrangement. The BB arrangement is also configured to, by means of switching of its semiconductor switches, operate such that, when electrical power is flowing out of the cell, power is moved from the main energy storage to the terminals, discharging said main energy storage, via the inductor. The bi-polar arrangement is configured to, by means of switching of its semiconductor switches, enable the BB arrangement to operate regardless of the polarities of the cell terminals.

According to the present invention, there is provided an MMC comprising a plurality of converter arms, each arm comprising a plurality of series-connected converter cells in accordance with the present disclosure.

According to another aspect not within the scope of the appended claims, there is provided a method performed by a control arrangement for controlling an embodiment of a converter cell of the present disclosure in an MMC. The method comprises charging the main energy storage by moving power from the terminals to said main energy storage via the inductor, and discharging the main energy storage by moving power from said main energy storage to the terminals via the inductor.

Embodiments of the present invention provides a Full-Bridge Buck-Boost (FB-BB) cell for MMC topologies (often called MMC or chain-link converters). A reduction in cell capacitance of up to 80% can be achieved with embodiments of the proposed cell compared with a regular Full-Bridge (FB) cell, but possibly with the price of doubling the semiconductor rating. Since the energy per cell may be reduced significantly (>5 times), the cell shoot-through failure and bypass protection requirements may be relaxed. This allows switches with less energy handling capabilities i.e., bond-wire devices to be used in MV and HV grid-connected applications that result in a cost reduction. The proposed cell becomes compact as the switching frequency of the FB-BB cell is increased. This may be advantageous e.g. for the silicon carbide (SiC) switches. Each FB-BB cell may generate the requested voltage reference with only switching frequency harmonic components unlike regular FB cells where lower order harmonic components are typically also present. Hence, even with fewer number of cells per converter arm, the lower-order harmonic generation of the converter is typically absent, making the cell suitable for e.g. Medium-Voltage Direct Current (MVDC), High-Voltage Direct Current (HVDC), Static Synchronous Compensator (STATCOM) and other MMC applications, such as Static Frequency, Railway Power Supply converter, etc., e.g. where the number of cells per arm can be less than 10.

Additionally, it is to be noted that the proposed FB-BB cell is a current-source cell. Hence, there may be no need for an arm reactor, or its value can be reduced, since each cell may have its own reactor to control the current at a cell level resulting in a reduced footprint.

Any advantage of any of the aspects may apply to any of the other aspects. Other objectives, features and advantages of the enclosed embodiments will be apparent from the following detailed disclosure, from the attached dependent claims as well as from the drawings.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated. The use of "first", "second" etc. for different features/components of the present disclosure are only intended to distinguish the features/components from other similar features/components and not to impart any order or hierarchy to the features/components.

### BRIEF DESCRIPTION OF THE DRAWINGS

Embodiments will be described, by way of example, with reference to the accompanying drawings, in which:
Fig 1 is a schematic circuit diagram of an MMC, in accordance with embodiments of the present invention.
Fig 2 is a schematic circuit diagram of an embodiment of a FB-BB converter cell, in accordance with an aspect not within the scope of the appended claims.
Fig 3 is a schematic circuit diagram of another embodiment of a FB-BB converter cell, in accordance with the present invention.
Fig 4a is a schematic circuit diagram illustrating a first stage of the embodiment of figure 3, showing only the components which are used during the positive half cycle of the cell operation.
Fig 4b is a schematic circuit diagram illustrating a second stage of the embodiment of figure 3, showing only the components which are used during the negative half cycle of the cell operation.

### DETAILED DESCRIPTION

Embodiments will now be described more fully hereinafter with reference to the accompanying drawings, in which certain embodiments are shown. However, other embodiments in many different forms are possible within the scope of the appended claims.

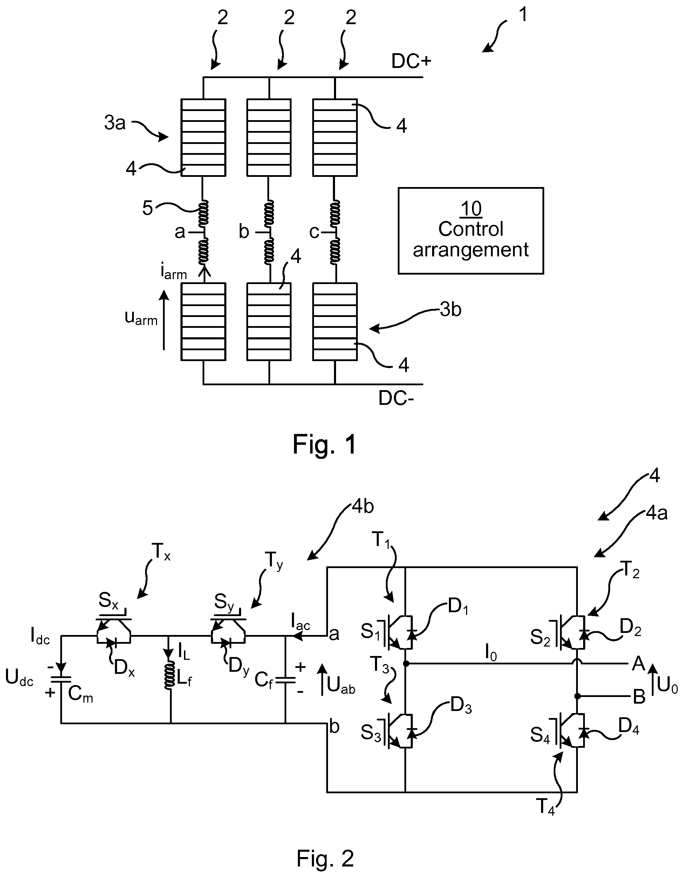

Rather, the following embodiments are provided by way of example so that this disclosure will be thorough and complete, and will fully convey the scope of the disclosure to those skilled in the art. Like numbers refer to like elements throughout the description. Figure 1 illustrates an MMC 1, here in the form of a three-phase Alternating Current (AC) to Direct Current (DC) chain-link converter in double-star (also called double-wye or -Y) topology. It is noted that HVDC or MVDC may be preferred applications for some embodiments of the present invention, but also other applications may be preferred for some other embodiments, e.g. STATCOM (typically with a delta (Δ) or wye (Y) topology), Static Frequency AC-AC Converter (typically with a three phase to single phase or three phase to three phase MMC) applications.

The MMC 1 comprises a plurality of converter arms 3 (may alternatively be called legs, branches or chain-links), each comprising a plurality of series-connected (may alternatively be called chain-linked or cascaded) converter cells 4. In the HVDC/MVDC example of the figure, a double-star topology is used, where each phase 2 has an upper arm 3a connected to one of the DC terminals (here the positive DC terminal DC+) and a lower arm 3b connected to the other of the DC terminals (here the negative terminal DC-). Each of the respective phases 2 is connected to, or configured to be connected to, a respective phase of an AC grid at the respective AC terminals a, b and c of the MMC. It should be noted that the FB-BB cells 4 of the present invention may be used in any MMC topology, in addition to the double-star topology exemplified in the figure, e.g. a delta topology, a wye topology, or a combination thereof.

When the MMC 1 has a DC side, e.g. for HVDC or MVDC applications, as in figure 1, the DC terminals DC+ and DC- may be connected to an energy storage system, e.g. comprising or consisting of one or several batteries or supercapacitors, or a combination thereof.

A control arrangement 10 of the MMC 1 can comprise central controllers as well as distributed controllers for controlling the operation of the MMC.

Figure 2 illustrates an example of the FB-BB cell 4. The cell 4 comprises a BB arrangement 4b (behaving as a current source) and a bi-polar arrangement 4a (behaving as a voltage source).

The bipolar arrangement 4a acts as an interface between the terminals A and B of the cell 4 and the BB arrangement, to make sure that regardless of the polarity of the terminals A and B, the BB arrangement 4b is able to move energy from the terminals A and B and/or secondary energy storage C_{f} to the primary energy storage Cₘ (when power is flowing into the cell) and from the primary energy storage Cₘ to the terminals A and B and/or secondary energy storage C_{f} (when power is flowing out of the cell), via an inductor L_{f}. In the example of figure 2, this is achieved by making sure that the polarity of the BB arrangement 4b is always the same, i.e. that the point b always has a negative polarity and point a always has a positive polarity, regardless of whether terminal A has a positive polarity and terminal B has a negative polarity or terminal B has a positive polarity and terminal A has a negative polarity. For this, the bi-polar arrangement 4a of the example of figure 2 comprises four converter valves T (T1, T2, T3 and T4) forming an H-bridge topology, each converter valve comprising a one-directional semiconductor switch S (S1, S2, S3 or S4) and an antiparallel diode D (D1, D2, D3 or D4).

The BB arrangement 4b of the example of figure 2 comprises a primary energy storage Cₘ, e.g. comprising a capacitor arrangement comprising at least one capacitor or supercapacitor or a battery arrangement comprising at least one battery. The primary energy storage is herein exemplified as a main capacitor Cₘ. The BB arrangement also comprises a secondary energy storage C_{f}, e.g. comprising a capacitor arrangement comprising at least one capacitor or supercapacitor or a battery arrangement comprising at least one battery. The secondary energy storage is herein exemplified as a filter capacitor C_{f}. The BB arrangement also comprises an inductor L_{f}, e.g. a reactor, herein also called a filter inductor L_{f}.

The primary energy storage Cₘ, the secondary energy storage Cf and the inductor L_{f} are all connected in parallel with each other, i.e. each is connected across each of the other two. Thus, two current paths for current circulation is formed within the BB arrangement, a front-end current path via the secondary energy storage C_{f}, the inductor L_{f} and a first BB conductor valve Ty, and a back-end current path via the primary energy storage Cₘ, the inductor L_{f} and a second BB converter valve Tx.

In the cell 4, a cell voltage Uo is formed between its two terminals A and B, and a DC voltage Udc is formed across the primary energy storage Cₘ. The currents Iac, IL and Idc schematically given in the figure have been given a symbolic direction. However, it is noted that when a current flow is discussed herein, it is the current flow in its positive direction which is intended.

The cell 4 is configured such that, when power is flowing into the cell, the primary energy storage Cₘ is charged in two steps. First, while the first BB semiconductor switch Sy is switched to conducting (also called ON or closed switch) and the second BB semiconductor switch Sx is switched to non-conducting (also called OFF or open switch), a current flows or is allowed to flow from the positive side of the secondary energy storage C_{f} to the inductor L_{f}, charging the inductor, via the first BB semiconductor switch Sy, e.g. a current circulates counter clockwise in the front-end path of the BB arrangement. Then, while both the first BB semiconductor switch Sy and the second BB semiconductor switch Sx are switched to non-conducting, a current flows or is allowed to flow from the charged inductor L_{f} to the positive side of the primary energy storage Cₘ, charging the primary energy storage, via the second antiparallel BB diode Dx, e.g. a current circulates clockwise in the back-end current path of the BB arrangement.

Similarly, the cell 4 is configured such that, when power is flowing out of the cell, the primary energy storage Cₘ is discharged in two steps. First, while the first BB semiconductor switch Sy is switched to non-conducting and the second BB semiconductor switch Sx is switched to conducting, a current is flowing or allowed to flow from the positive side of the primary energy storage Cₘ to the inductor L_{f}, charging the inductor, via the second BB semiconductor switch Sx, e.g. a current circulates counter clockwise in the back-end current path of the BB arrangement. Then, while both the first BB semiconductor switch Sy and the second BB semiconductor switch Sx are switched to non-conducting, a current flows or is allowed to flow from the charged inductor L_{f} to the positive side of the secondary energy storage C_{f}, charging the secondary energy storage, via the first antiparallel BB diode Dy, e.g. a current circulates clockwise in the front-end current path in of the BB arrangement.

The first valve Ty comprises a first switch Sy and a first antiparallel diode Dy, and the second valve Tx comprises a second switch Sx and a second antiparallel diode Dx. In the example of figure 2, the first and second converter valves Ty and Tx are connected in series with each other, with the first and second switches Sy and Sx having the same polarity, i.e. able to conduct electric current in the same direction of the series connection when switched to electrically conducting.

Thus, in an example, the BB arrangement comprises a primary energy storage Cₘ, an inductor L_{f}, and a secondary energy storage C_{f}, as well as first and second converter valves Ty and Tx. The secondary energy storage C_{f} is connected in series with the first converter valve Ty, and together with said first converter valve in parallel with the inductor L_{f}, and the primary energy storage Cₘ is connected in series with the second converter valve Tx, and together with said second converter valve Tx in parallel with the inductor L_{f}.

In any MMC (chain-link converter) 1, the net DC energy of the cell energy storage exchanged per fundamental cycle with the grid may be zero. A switching average model can be developed to understand the switch S ratings of the proposed cell structure. The cell output voltage (Uo) and current (Io) are known quantities from which the primary energy storage voltage (Udc) and current (Idc) waveforms can be determined as follows: ${I}_{dc} \left(t\right) = \frac{{U}_{ac} \left(t\right) {I}_{ac} \left(t\right)}{{U}_{dc} \left(t\right)}$ (1) ${U}_{dc} \left(t\right) = \frac{1}{C} \int {I}_{dc} \left(t\right) dt$ (2)

The switching cycle average value of the switch currents can be defined as: ${I}_{Sy} \left(t\right) = {I}_{dc} \left(t\right)$ (3) ${I}_{Sx} \left(t\right) = {I}_{0} \left(t\right)$ (4)

Hence, the first BB switch Sy is rated to the peak of cell output current Io i.e., arm current and the second BB switch Sx is rated to the peak of the DC current Idc. The first and second BB switches Sy and Sx each must be able to block the peak of sum of Uab and Udc. Assuming the peak of Uab being the same as Udc, each of the first and second BB switches must be able to block twice the nominal cell DC voltage Ude. The switches S1, S2, S3 and S4 of the bi-polar arrangement 4a are rated to the peak of the cell output current, i.e. arm current, Io and must block the ac voltage Uac.

For power flow into the cell, i.e. charging the main capacitor Cm (that is, from cell AC side to the main capacitor Cm), the first BB switch Sy is switched to conducting and the second BB switch Sx is non-conducting. When the first BB switch Sy is switched to conducting, the inductor Lf is charged by the filter capacitor Cf and when it is switched to non-conducting, the energy stored in the inductor Lf is transferred to the main capacitor Cm via the second BB diode Dx. At steady-state operation of the converter, the equation governing the duty cycle of the first BB switch Sy and the inductor current IL can be defined as: $\frac{{U}_{d c}}{{U}_{a c}} = \frac{{D}_{y}}{1 - {D}_{y}}$ (5) ${I}_{L} = \frac{{I}_{ac}}{{D}_{y}} = \frac{{I}_{dc}}{1 - {D}_{y}}$ (6)

Similarly, for power flow out of the cell, i.e. discharging the main capacitor Cm (that is, from the main capacitor Cm to the AC side of the cell), the second BB switch Sx is switched to conducting and the first BB switch Sy is kept non-conducting. When the second BB switch Sx is turned to conducting, the inductor Lf is charged by the main capacitor Cm and when it is turned to non-conducting, the energy stored in the inductor Lf is transferred to the filter capacitor Cf via the first BB diode Dy. At steady-state operation of the converter, the equation governing the duty cycle of the second BB switch Sx and the inductor current IL can be defined as: $\frac{{U}_{ac}}{{U}_{dc}} = \frac{{D}_{x}}{1 - {D}_{x}}$ (7) ${I}_{L} = \frac{{I}_{dc}}{{D}_{x}} = \frac{{I}_{ac}}{1 - {D}_{x}}$ (8)

It can be noted that the direction of the inductor current IL is reversed for reversing the power flow.

In the bi-polar arrangement 4a, the first and second switches S1 and S4 are turned to conducting (second and third switches S2 and S3 are turned to non-conducting) to generate a positive voltage reference, whereas second and third switches S2 and S3 are turned to conducting (first and second switches S1 and S4 are turned to non-conducting) to generate a negative voltage reference, respectively. These switches S1, S2, S3 and S4 typically operate at Zero Voltage Switching (ZVS).

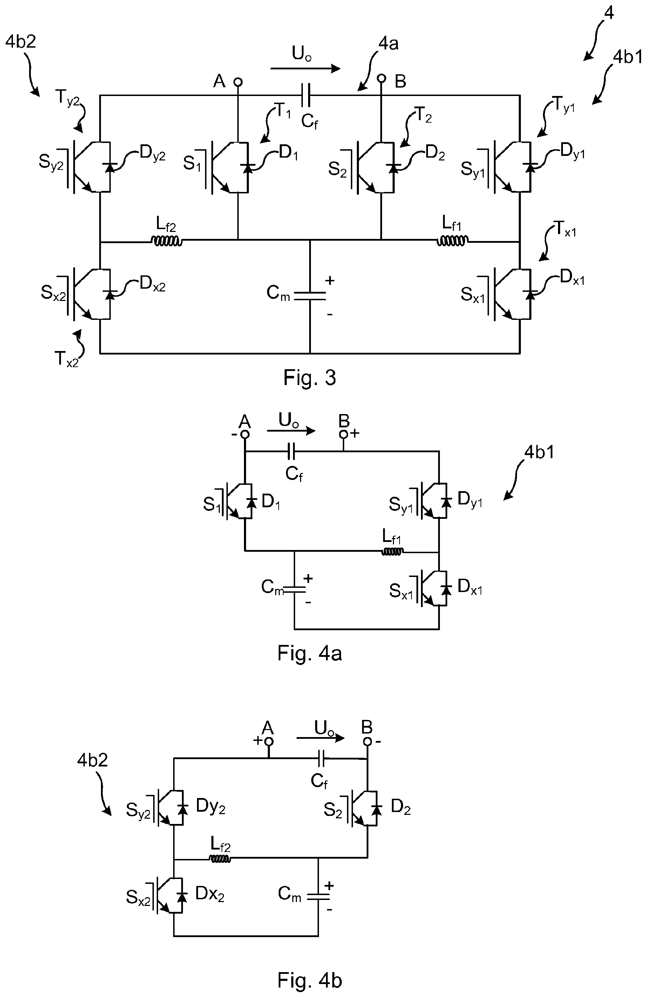

Figure 3 illustrates an embodiment of the FB-BB cell 4 according to the invention. The discussion above relating to the embodiment of figure 2 is also in applicable parts relevant for the embodiment of figure 3.

Again, the bipolar arrangement 4a acts as an interface between the terminals A and B of the cell 4 and the BB arrangement, to make sure that regardless of the polarity of the terminals A and B, the BB arrangement 4b is able to move energy from the cell terminals A and B (or secondary energy storage C_{f}) to the primary energy storage Cₘ when power is flowing into the cell and from the primary energy storage Cₘ to the cell terminals A and B (or secondary energy storage C_{f}) when power is flowing out of the cell, via an inductor Lf (here either a first inductor Lf1 or a second inductor Lf2). However, in the embodiment of figure 3, the BB arrangement 4b comprises two separate BB stages, a first BB stage 4b1 and a second BB stage 4b2 sharing the same main capacitor Cm. Thus, the bi-polar arrangement 4a can be reduced to only two valves T1 and T2, for switching between the two BB stages 4b1 and 4b2.

During a positive half cycle, as illustrated in figure 4a, the first switch S1 of the bi-polar arrangement is conducting (the second switch S2 non-conducting), whereby the first BB stage, comprising a first BB switch Sy1 and a second BB switch Sx1 and an inductor Lf1, is operating to move power between the primary and secondary energy storages Cₘ and C_{f} (i.e. between the main energy storage Cₘ and the terminals A and B of the cell).

During a negative half cycle, as illustrated in figure 4b, the second switch S2 of the bi-polar arrangement is conducting (the first switch S1 non-conducting), whereby the second BB stage, comprising a first BB switch Sy2 and a second BB switch Sx2 and an inductor Lf2, is operating to move power between the primary and secondary energy storages Cₘ and C_{f} (i.e. between the main energy storage Cₘ and the terminals A and B of the cell).

Each converter valve T, both in the bi-directional arrangement 4a and in the BB arrangement 4b, and for any embodiment of the invention, comprises a one-directional semiconductor switch S, e.g. comprising a Si or SiC (where SiC may be preferred for the relatively high switching frequencies of embodiments of the present invention) Insulated-Gate Bipolar Transistor (IGBT), Integrated Gate-Commutated Thyristor (IGCT), Metal-Oxide-Semiconductor Field-Effect Transistor (MOSFET), or Bi-Mode Insulated Gate Transistor (BiGT) depending on the application for which the MMC 1 is used, and an antiparallel diode D (connected across the switch S but antiparallel by having the opposite polarity, i.e. by being able to conduct in the opposite direction).

In some examples, the plurality of converter valves of the bi-polar arrangement 4a comprises four converter valves T1, T2, T3 and T4 forming an H-bridge topology, e.g. as in the example of figure 2.

In embodiments of the present invention, the bi-polar arrangement 4a is configured to alternatingly energize a first or a second BB stage 4b1 or 4b2 of the BB arrangement 4b, e.g. as in the embodiment of figure 3.

In some other embodiments of the present invention, each of the plurality of semiconductor switches Sx and Sy of the BB arrangement 4b is configured for a switching frequency of at least 1 kHz, e.g. at least 5 or 10 kHz.

In some other embodiments of the present invention, each of the plurality of semiconductor switches Sx and Sy of the BB arrangement 4b comprises a silicon carbide (SiC) or silicon (Si) semiconductor material, or a combination thereof. In some embodiments SiC is preferred due to its ability to handle high switching frequencies.

In some other embodiments of the present invention, each of the plurality of semiconductor switches S1, S2, S3 and S4, and/or Sx and Sy of the BB arrangement and/or of the bi-polar arrangement comprises an Insulated-Gate Bipolar Transistor (IGBT), an Integrated Gate-Commutated Thyristor (IGCT), a Bi-Mode Insulated Gate Transistor (BiGT) or a Metal-Oxide-Semiconductor Field-Effect Transistor (MOSFET). These are typical examples of semiconductor switching devices but any other may also be useful in embodiments of the present invention.

In some other embodiments of the present invention, the primary energy storage Cₘ and/or the secondary energy storage C_{f} comprises or consists of a capacitor or supercapacitor.

In some other embodiments of the present invention, the MMC has a wye, double-wye, triple-wye or delta topology, or a combination thereof.

In some other embodiments of the present invention, the MMC is configured to operate as a STATCOM, as an HVDC or MVDC converter, or as a railway intertie.

In some other embodiments of the present invention, the MMC 1 has a DC side comprising a positive DC terminal DC+ and a negative DC terminal DC-. In some embodiments, the positive and negative DC terminals are connected to an energy storage system, e.g. comprising or consisting of one or several batteries or supercapacitors, or a combination thereof.

In accordance with an aspect not within the scope of the appended claims, there is provided a full-bridge converter cell 4. The cell comprises a buck-boost (BB) arrangement 4b comprising a plurality of semiconductor switches Sx and Sy. The cell also comprises a bi-polar arrangement 4a arranged as an interface between the BB arrangement and terminals A and B of the cell. The bi-polar arrangement comprises a plurality of semiconductor switches S1-S4. The BB arrangement is configured to operate by means of switching of its semiconductor switches such that when electrical power is flowing into the cell, power is moved from the terminals (or secondary energy storage Cf) to the main energy storage Cm via the inductor Lf, and when electrical power is flowing out of the cell, power is moved from the main energy storage Cm to the terminals (or secondary energy storage), via the inductor. The bi-polar arrangement 4a is configured to by means of switching of its semiconductor switches enable the BB arrangement 4b to operate regardless of the polarities of the cell terminals.

The present disclosure has mainly been described above with reference to a few embodiments. However, as is readily appreciated by a person skilled in the art, other embodiments than the ones disclosed above are equally possible within the scope of the present disclosure, as defined by the appended claims.

## Claims

1. A Modular Multilevel Converter, MMC, (1) comprising a plurality of converter arms (3), each arm comprising a plurality of series-connected converter cells (4), wherein a converter cell of the plurality of series-connected converter cells is a full-bridge converter cell (4) comprising:
a first terminal (A) and a second terminal (B);
a main capacitor (Cm) having a positive terminal and a negative terminal;
a secondary energy storage (Cf) connected between the first terminal and the second terminal;
a buck-boost, BB, arrangement (4b1, 4b2) comprising a plurality of converter valves (Tx1, Tx2,Ty1, Ty2), each valve comprising a semiconductor switch (Sx1, Sx2, Sy1, Sy2) and an antiparallel diode (Dx1, Dx2, Dy1, Dy2); and
a bi-polar arrangement (4a) arranged as an interface between the BB arrangement (4b1, 4b2) and the terminals (A, B) of the cell, comprising a first valve (T₁) connected between the first terminal (A) of the cell and the positive terminal of the main capacitor and a second valve (T₂) connected between the second terminal (B) of the cell and the positive terminal of the main capacitor, each valve comprising a semiconductor switch (S1, S2) and an antiparallel diode (D1, D2);
wherein the BB arrangement (4b1, 4b2) is configured to, by means of switching of its semiconductor switches, operate such that:
when electrical power is flowing into the cell, power is moved from the terminals (A, B) to the main capacitor (Cₘ) of the BB arrangement, charging said main capacitor, via either one of a first inductor (L_{f1}) or a second inductor (L_{f2}) of the BB arrangement, and
when electrical power is flowing out of the cell, power is moved from the main capacitor (Cₘ) to the terminals (A, B), discharging said main capacitor, via either one of the first inductor (L_{f1}) or the second inductor (L_{f2});
wherein the bi-polar arrangement (4a) is configured to, by means of switching of its semiconductor switches, enable the BB arrangement to operate regardless of the polarities of the cell terminals (A, B);
wherein the bi-polar arrangement (4a) is configured to alternatingly energize a first or a second BB stage (4b1, 4b2) of the BB arrangement (4b);
wherein the first BB stage (4b1) comprises two valves (T_{y1}, Tₓ₁) connected in series between the second terminal (B) of the cell and the negative terminal of the main capacitor and the first inductor (L_{f1}) connected between the positive terminal of the main capacitor and an electrical connection point located between the two valves of the first BB stage;
wherein the second BB stage (4b2) comprises two valves (T_{y2}, Tₓ₂) connected in series between the first terminal (A) of the cell and the negative terminal of the main capacitor and the second inductor (L_{f2}) connected between the positive terminal of the main capacitor and an electrical connection point located between the two valves of the second BB stage; and
wherein the first BB stage and the second BB stage share the same main capacitor;
wherein no capacitor is connected in parallel with the series connection of the two valves of the first BB stage and no capacitor is connected in parallel with the series connections of the two valves of the second BB stage;
wherein more than 10% peak-to-peak arm ripple energy is handled by the main capacitor, whereby the capacitance of the main capacitor is reduced by up to 80% of a cell capacitance calculated according to: ${C}_{cell} = \frac{2 {E}_{arm , pk - pk}}{N \left({U}_{max}^{2}-{U}_{min □}^{2}\right)}$
wherein C_{cell} is the required cell capacitance, E_{arm,pk-pk} is the peak-to-peak arm ripple energy which is calculated from the converter arm current and voltage waveforms, N is the number of converter cells per converter arm, and Uₘₐₓ and Uₘᵢₙ are the cell voltage values at the maximum and minimum ripple points obtained from the system design considering all operating points of the MMC.

2. The MMC of claim 1, wherein:
during a positive half cycle, a first switch (S1) of the bi-polar arrangement is conducting while a second switch (S₂) is non-conducting, whereby the first BB stage is operating to move power between the main capacitor and the terminals of the cell, and
during a negative half cycle, the second switch S2 of the bi-polar arrangement is conducting while the first switch S1 is non-conducting, whereby the second BB stage is operating to move power between the main capacitor and the terminals of the cell.

3. The MMC of claim 1 or 2, wherein each of the plurality of semiconductor switches (Sx1, Sx2, Sy1, Sy2) of the BB arrangement (4b) is configured for a switching frequency of at least 1 kHz, e.g. at least 5 or 10 kHz.

4. The MMC of any preceding claim, wherein each of the plurality of semiconductor switches (Sx1, Sx2, Sy1, Sy2) of the BB arrangement (4b) comprises a silicon carbide, SiC, or silicon, Si, semiconductor material, or a combination thereof, preferably SiC.

5. The MMC of any preceding claim, wherein each of the plurality of semiconductor switches (S1, S2, Sx1, Sx2, Sy1, Sy2) of the BB arrangement and/or of the bi-polar arrangement comprises an Insulated-Gate Bipolar Transistor, IGBT, an Integrated Gate-Commutated Thyristor, IGCT, a Bi-Mode Insulated Gate Transistor, BiGT, or a Metal-Oxide-Semiconductor Field-Effect Transistor, MOSFET.

6. The MMC of any preceding claim, wherein the main capacitor (Cₘ) comprises or consists of a capacitor or a supercapacitor.

7. The MMC of any preceding claim, wherein the MMC has a wye, double-wye, triple-wye or delta topology, or a combination thereof.

8. The MMC of any preceding claim, wherein the MMC is configured to operate as a STATCOM, as an HVDC or MVDC converter, or as a railway intertie.

9. The MMC of any preceding claim, wherein the MMC (1) has a DC side comprising a positive DC terminal (DC+) and a negative DC terminal (DC-).

10. The MMC of claim 9, wherein the positive and negative DC terminals are connected to an energy storage system, e.g. comprising or consisting of one or several batteries or supercapacitors, or a combination thereof.

11. A method performed by a control arrangement (10) for controlling a converter cell (4) of a Modular Multilevel Converter, MMC, (1) according to any one of claims 1-10, the method comprising:
charging the main capacitor (Cₘ) by moving power from the terminals (A, B) to said main capacitor (Cₘ), via either one of the first inductor (L_{f1}) or the second inductor (L_{f2}); and
discharging the main capacitor (Cₘ) by moving power from said main capacitor (Cₘ) to the terminals (A, B), via the first inductor (L_{f1}) or the second inductor (L_{f2}).

## Patentansprüche

1. Modularer Multilevel-Umrichter, MMC, (1), der eine Vielzahl von Umrichterarmen (3) umfasst, wobei jeder Arm eine Vielzahl von in Reihe verbundene Umrichterzellen (4) umfasst, wobei eine Umrichterzelle der Vielzahl von in Reihe verbundenen Umrichterzellen eine Vollbrückenumrichterzelle (4) ist, umfassend:
einen ersten Anschluss (A) und einen zweiten Anschluss (B);
einen Hauptkondensator (Cm) mit einem positiven Anschluss und einem negativen Anschluss;
einen sekundären Energiespeicher (Cf), der zwischen dem ersten Anschluss und dem zweiten Anschluss verbunden ist;
eine Buck-Boost- bzw. BB-Anordnung (4b1, 4b2), die eine Vielzahl von Umrichterventilen (Tx1, Tx2, Ty1, Ty2) umfasst, wobei jedes Ventil einen Halbleiterschalter (Sx1, Sx2, Sy1, Sy2) und eine antiparallele Diode (Dx1, Dx2, Dy1, Dy2) umfasst; und
eine bipolare Anordnung (4a), die als eine Schnittstelle zwischen der BB-Anordnung (4b1, 4b2) und den Anschlüssen (A, B) der Zelle angeordnet ist, umfassend ein erstes Ventil (T₁), das zwischen dem ersten Anschluss (A) der Zelle und dem positiven Anschluss des Hauptkondensators verbunden ist, und ein zweites Ventil (T₂), das zwischen dem zweiten Anschluss (B) der Zelle und dem positiven Anschluss des Hauptkondensators verbunden ist, wobei jedes Ventil einen Halbleiterschalter (S1, S2) und eine antiparallele Diode (D1, D2) umfasst;
wobei die BB-Anordnung (4b1, 4b2) dazu ausgelegt ist, durch Schalten ihrer Halbleiterschalter so zu arbeiten, dass:
wenn elektrische Leistung in die Zelle fließt, Leistung von den Anschlüssen (A, B) zu dem Hauptkondensator (Cₘ) der BB-Anordnung bewegt wird, wodurch der Hauptkondensator entweder über eine erste Induktivität (L_{f1}) oder eine zweite Induktivität (L_{f2}) der BB-Anordnung geladen wird, und
wenn elektrische Leistung aus der Zelle fließt, Leistung von dem Hauptkondensator (Cm) zu den Anschlüssen (A, B) bewegt wird, wodurch der Hauptkondensator über entweder die erste Induktivität (L_{f1}) oder die zweite Induktivität (L_{f2}) entladen wird;
wobei die bipolare Anordnung (4a) dazu ausgelegt ist, durch Schalten ihrer Halbleiterschalter zu ermöglichen, dass die BB-Anordnung ungeachtet der Polaritäten der Zellenanschlüsse (A, B) arbeitet;
wobei die bipolare Anordnung (4a) dazu ausgelegt ist, abwechselnd eine erste oder eine zweite BB-Stufe (4b1, 4b2) der BB-Anordnung (4b) mit Energie zu versorgen;
wobei die erste BB-Stufe (4b1) zwei Ventile (T_{y1}, Tₓ₁), die zwischen dem zweiten Anschluss (B) der Zelle und dem negativen Anschluss des Hauptkondensators in Reihe verbunden sind, und die erste Induktivität (L_{f1}) umfasst, die zwischen dem positiven Anschluss des Hauptkondensators und einem elektrischen Verbindungspunkt, der sich zwischen den zwei Ventilen der ersten BB-Stufe befindet, verbunden ist;
wobei die zweite BB-Stufe (4b2) zwei Ventile (T_{y2}, Tₓ₂), die zwischen dem ersten Anschluss (A) der Zelle und dem negativen Anschluss des Hauptkondensators in Reihe verbunden sind, und die zweite Induktivität (L_{f2}) umfasst, die zwischen dem positiven Anschluss des Hauptkondensators und einem elektrischen Verbindungspunkt, der sich zwischen den zwei Ventilen der zweiten BB-Stufe befindet, verbunden ist; und
wobei die erste BB-Stufe und die zweite BB-Stufe denselben Hauptkondensator gemeinsam nutzen;
wobei kein Kondensator parallel zu der Reihenverbindung der zwei Ventile der ersten BB-Stufe verbunden ist und kein Kondensator parallel zu den Reihenverbindung der zwei Ventile der zweiten BB-Stufe verbunden ist;
wobei mehr als 10 % Spitze-zu-Spitze-Armwelligkeitsenergie durch den Hauptkondensator gehandhabt wird, wodurch die Kapazität des Hauptkondensators um bis zu 80 % einer Zellkapazität reduziert wird, gemäß Folgendem: ${c}_{cell} = \frac{2 {E}_{arm , pk - pk}}{N \left({U}_{max}^{2}-{U}_{min}^{2}\right)}$
wobei C_{cell} die erforderliche Zellkapazität ist, Eₐᵣₘ,ₚₖ₋ₚₖ die Spitze-zu-Spitze-Armwelligkeitsenergie ist, die aus den Umrichterarmstrom- und -spannungswellenformen berechnet wird, N die Anzahl von Umrichterzellen pro Umrichterarm ist und Uₘₐₓ und Uₘᵢₙ die Zellspannungswerte an den maximalen und minimalen Welligkeitspunkten sind, die aus dem Systemdesign unter Berücksichtigung aller Betriebspunkte des MMC erhalten werden.

2. MMC nach Anspruch 1, wobei:
während eines positiven Halbzyklus ein erster Schalter (S1) der bipolaren Anordnung leitend ist, während ein zweiter Schalter (S2) nichtleitend ist, wobei die erste BB-Stufe betrieben wird, um Leistung zwischen dem Hauptkondensator und den Anschlüssen der Zelle zu bewegen, und
während eines negativen Halbzyklus der zweite Schalter S2 der bipolaren Anordnung leitend ist, während der erste Schalter S1 nichtleitend ist, wobei die zweite BB-Stufe betrieben wird, um Leistung zwischen dem Hauptkondensator und den Anschlüssen der Zelle zu bewegen.

3. MMC nach Anspruch 1 oder 2, wobei jeder der Vielzahl von Halbleiterschaltern (Sx1, Sx2, Sy1, Sy2) der BB-Anordnung (4b) für eine Schaltfrequenz von mindestens 1 kHz, z. B. mindestens 5 oder 10 kHz, konfiguriert ist.

4. MMC nach einem der vorhergehenden Ansprüche, wobei jeder der Vielzahl von Halbleiterschaltern (Sx1, Sx2, Sy1, Sy2) der BB-Anordnung (4b) ein Siliciumcarbid- bzw. SiC- oder Silicium- bzw. Si-Halbleitermaterial umfasst, oder eine Kombination davon, vorzugsweise SiC.

5. MMC nach einem der vorhergehenden Ansprüche, wobei jeder der Vielzahl von Halbleiterschaltern (S1, S2, Sx1, Sx2, Sy1, Sy2) der BB-Anordnung und/oder der bipolaren Anordnung einen Bipolartransistor mit isoliertem Gate, IGBT, einen integrierten Gate-kommutierten Thyristor, IGCT, einen Bi-Mode-Transistor mit isoliertem Gate, BiGT oder einen Metalloxidhalbleiter-Feldeffekttransistor, MOSFET, umfasst.

6. MMC nach einem der vorhergehenden Ansprüche, wobei der Hauptkondensator (Cₘ) einen Kondensator oder einen Superkondensator umfasst oder daraus besteht.

7. MMC nach einem der vorhergehenden Ansprüche, wobei der MMC eine Stern-, Doppelstern-, Dreifachstern- oder Dreieck-Topologie oder eine Kombination davon aufweist.

8. MMC nach einem der vorhergehenden Ansprüche, wobei der MMC dazu ausgelegt ist, als STATCOM, als HVDC- oder MVDC-Umrichter oder als eine Bahnnetzkupplung zu arbeiten.

9. MMC nach einem der vorhergehenden Ansprüche, wobei der MMC (1) eine DC-Seite aufweist, die einen positiven DC-Anschluss (DC+) und einen negativen DC-Anschluss (DC-) umfasst.

10. MMC nach Anspruch 9, wobei der positive und der negative DC-Anschluss mit einem Energiespeichersystem verbunden sind, das z. B. eine oder mehrere Batterien oder Superkondensatoren oder eine Kombination davon umfasst oder daraus besteht.

11. Verfahren, das durch eine Steueranordnung (10) zum Steuern einer Umrichterzelle (4) eines modularen Multilevel-Umrichters, MMC, (1) nach einem der Ansprüche 1-10 durchgeführt wird, wobei das Verfahren Folgendes umfasst:
Laden des Hauptkondensators (Cₘ) durch Bewegen von Leistung von den Anschlüssen (A, B) zu dem Hauptkondensator (Cₘ) über entweder die erste Induktivität (L_{f1}) oder die zweite Induktivität (L_{f2}); und
Entladen des Hauptkondensators (Cm) durch Bewegen von Leistung von dem Hauptkondensator (Cm) zu den Anschlüssen (A, B) über die erste Induktivität (L_{f1}) oder die zweite Induktivität (L_{f2}).

## Revendications

1. Convertisseur multi-niveaux modulaire, MMC, (1) comprenant une pluralité de branches de convertisseur (3), chaque branche comprenant une pluralité de cellules de convertisseur (4) connectées en série, une cellule de convertisseur de la pluralité de cellules de convertisseurs connectées en série étant une cellule de convertisseur (4) en pont complet comprenant :
une première borne (A) et une deuxième borne (B) ;
un condensateur principal (Cm) ayant une borne positive et une borne négative ;
un stockage d'énergie secondaire (Cf) connecté entre la première borne et la deuxième borne ;
un agencement abaisseur-élévateur, BB, (4b1, 4b2) comprenant une pluralité de valves de convertisseur (Tx1, Tx2, Ty1, Ty2), chaque valve comprenant un commutateur à semi-conducteurs (Sx1, Sx2, Sy1, Sy2) et une diode en antiparallèle (Dx1, Dx2, Dy1, Dy2) ; et
un agencement bipolaire (4a) agencé en tant qu'interface entre l'agencement BB (4b1, 4b2) et les bornes (A, B) de la cellule, comprenant une première valve (T₁) connectée entre la première borne (A) de la cellule et la borne positive du condensateur principal et une deuxième valve (T₂) connectée entre la deuxième borne (B) de la cellule et la borne positive du condensateur principal, chaque valve comprenant un commutateur à semi-conducteurs (S1, S2) et une diode en antiparallèle (D1, D2) ;
l'agencement BB (4b1, 4b2) étant configuré pour, par commutation de ses commutateurs à semi-conducteurs, fonctionner de telle sorte que :
lorsque de la puissance électrique circule dans la cellule, la puissance est déplacée des bornes (A, B) au condensateur principal (Cₘ) de l'agencement BB, chargeant ledit condensateur principal, via soit une première bobine d'inductance (L_{f1}), soit une deuxième bobine d'inductance (L_{f2}) de l'agencement BB, et
lorsque de la puissance électrique circule hors de la cellule, de la puissance est déplacée du condensateur principal (Cm) vers les bornes (A, B), déchargeant ledit condensateur principal, via soit la première bobine d'inductance (L_{f1}), soit la deuxième bobine d'inductance (L_{f2}) ;
l'agencement bipolaire (4a) étant configuré pour, par commutation de ses commutateurs à semi-conducteurs, permettre à l'agencement BB de fonctionner quelles que soient les polarités des bornes de cellule (A, B) ;
l'agencement bipolaire (4a) étant configuré pour alimenter de manière alternée un premier ou un deuxième étage BB (4b1, 4b2) de l'agencement BB (4b) ;
le premier étage BB (4b1) comprenant deux valves (T_{y1}, Tₓ₁) connectées en série entre la deuxième borne (B) de la cellule et la borne négative du condensateur principal et la première bobine d'inductance (L_{f1}) connectée entre la borne positive du condensateur principal et un point de connexion électrique situé entre les deux valves du premier étage BB ;
le deuxième étage BB (4b2) comprenant deux valves (T_{y2}, Tₓ₂) connectées en série entre la première borne (A) de la cellule et la borne négative du condensateur principal et la deuxième bobine d'inductance (L_{f2}) connectée entre la borne positive du condensateur principal et un point de connexion électrique situé entre les deux valves du deuxième étage BB ; et
le premier étage BB et le deuxième étage BB partageant un même condensateur principal ;
aucun condensateur n'est connecté en parallèle avec la connexion en série des deux valves du premier étage BB et aucun condensateur n'est connecté en parallèle avec les connexions en série des deux valves du deuxième étage BB ;
plus de 10 % d'énergie d'ondulation de branche crête à crête étant gérée par le condensateur principal, la capacité du condensateur principal étant ainsi réduite jusqu'à 80 % d'une capacité de cellule calculée selon : ${c}_{cell} = \frac{2 {E}_{arm , pk - pk}}{N \left({U}_{max}^{2}-{U}_{min}^{2}\right)}$
C_{cell} étant la capacité de cellule requise, Eₐᵣₘ,ₚₖ₋ₚₖ étant l'énergie d'ondulation de branche crête-à-crête qui est calculée à partir des formes d'onde de courant et de tension de branche de convertisseur, N étant le nombre de cellules de convertisseur par branche de convertisseur, et Uₘₐₓ et Uₘᵢₙ étant les valeurs de tension de cellule aux points d'ondulation maximum et minimum obtenues à partir de la conception de système en considérant tous les points de fonctionnement du MMC.

2. MMC selon la revendication 1,
pendant un demi-cycle positif, un premier commutateur (S1) de l'agencement bipolaire étant conducteur tandis qu'un deuxième commutateur (S2) est non conducteur, le premier étage BB fonctionnant ainsi pour déplacer de la puissance entre le condensateur principal et les bornes de la cellule, et
pendant un demi-cycle négatif, le deuxième commutateur S2 de l'agencement bipolaire étant conducteur tandis que le premier commutateur S1 est non conducteur, le deuxième étage BB fonctionnant pour déplacer de la puissance entre le condensateur principal et les bornes de la cellule.

3. MMC selon la revendication 1 ou 2, chacun de la pluralité de commutateurs à semi-conducteurs (Sx1, Sx2, Sy1, Sy2) de l'agencement BB (4b) étant configuré pour une fréquence de commutation d'au moins 1 kHz, par exemple d'au moins 5 ou 10 kHz.

4. MMC selon l'une quelconque des revendications précédentes, chacun de la pluralité de commutateurs à semi-conducteurs (Sx1, Sx2, Sy1, Sy2) de l'agencement BB (4b) comprenant un matériau semi-conducteur en carbure de silicium, SiC, ou silicium, Si, ou une combinaison de ceux-ci, de préférence SiC.

5. MMC selon l'une quelconque des revendications précédentes, chacun de la pluralité de commutateurs à semi-conducteur (S1, S2, Sx1, Sx2, Sy1, Sy2) de l'agencement BB et/ou de l'agencement bipolaire comprenant un transistor bipolaire à grille isolée, IGBT, un thyristor intégré commuté par la gâchette, IGCT, un transistor à grille isolée bi-mode, BiGT, ou un transistor à effet de champ à métal-oxyde-semi-conducteur, MOSFET.

6. MMC selon l'une quelconque des revendications précédentes, le condensateur principal (Cₘ) comprenant ou consistant en un condensateur ou un supercondensateur.

7. MMC selon l'une quelconque des revendications précédentes, le MMC ayant une topologie en étoile, en étoile double, en étoile triple ou en triangle, ou une combinaison de celles-ci.

8. MMC selon l'une quelconque des revendications précédentes, le MMC étant configuré pour fonctionner comme un STATCOM, comme un convertisseur HVDC ou MVDC, ou comme une interconnexion ferroviaire.

9. MMC selon l'une quelconque des revendications précédentes, le MMC (1) ayant un côté CC comprenant une borne CC positive (DC+) et une borne CC négative (DC-).

10. MMC selon la revendication 9, les bornes CC positive et négative étant connectées à un système de stockage d'énergie, par exemple comprenant ou consistant en une ou plusieurs batteries ou supercondensateurs, ou une combinaison de ceux-ci.

11. Procédé réalisé par un agencement de commande (10) pour commander une cellule de convertisseur (4) d'un convertisseur multi-niveaux modulaire, MMC, (1) selon l'une quelconque des revendications 1 à 10, le procédé comprenant :
la charge du condensateur principal (Cₘ) en déplaçant de la puissance des bornes (A, B) audit condensateur principal (Cₘ), via soit la première bobine d'inductance (L_{f1}), soit la deuxième bobine d'inductance (L_{f2}) ; et
la décharge du condensateur principal (Cm) en déplaçant de la puissance dudit condensateur principal (Cm) aux bornes (A, B), via la première bobine d'inductance (L_{f1}) ou la deuxième bobine d'inductance (L_{f2}).
